# EUROPÄISCHE PATENTANMELDUNG

(11) **EP 3 911 116 A1**
(43) Veröffentlichungstag der Anmeldung: **17.11.2021**
(21) Anmeldenummer: 21153434.2
(22) Anmeldetag: 26.01.2021
(51) Int. Cl.: H05B 3/84, B60S 1/02

(54) **BILDERFASSUNGSANORDNUNG EINES KRAFTFAHRZEUGS**

(30) Priorität: 15.05.2020 DE 102020113199
(71) Anmelder: K.L. Kaschier- und Laminier GmbH, 48455 Bad Bentheim-Gildehaus (DE)
(72) Erfinder: Schulze Wehninck, Rembert, 82327 Tutzing (DE)
(74) Vertreter: Cohausz Hannig Borkowski Wißgott

(57) **Zusammenfassung**

Die Erfindung betrifft eine Anordnung zum bildlichen Erfassen des Raumes vor oder hinter einem Kraftfahrzeug mit einer hinter einer Kraftfahrzeugscheibe befestigten Bilderfassungseinheit, wobei auf der Innenfläche der Kraftfahrzeugscheibe eine transparente Heizfolie befestigt ist, die sich im Strahlenbereich der Bilderfassungseinheit befindet.

## Beschreibung

Die Erfindung betrifft eine Anordnung zum bildlichen Erfassen des Raumes vor oder hinter einem Kraftfahrzeug mit einer hinter einer Kraftfahrzeugscheibe befestigten Bilderfassungseinheit.

Eine Anordnung zum Bilderfassen bei einem Kfz. ist aus der DE 10 2014 006 891 A1 bekannt. Unterhalb des Strahlenbereichs der Bilderfassungseinheit befindet sich eine Streulichtblende, in der ein Heizelement angeordnet ist, um die Innenfläche der Kraftfahrzeugscheibe von Beschlagen, Eisbildung und Reifbildung frei zu halten. Der Aufbau einer solchen Streulichtblende ist technisch aufwändig.

Alternativ kann der Strahlungsbereich eis- und beschlagfrei gehalten werden, indem um diesen Bereich herum in der Scheibe Heizelemente insbesondere in Form von Silberdruck aufgebracht sind. Nachteilig hieran, dass es lange dauert, bis die Mitte des Strahlungsbereichs eisfrei ist. Außerdem ist die anschließende Kontaktierung z. B. durch Löten aufwändig und teuer.

Eine dritte bekannte Alternative ist es, im Sichtbereich des Bilderfassungsgerätes selbst Heizmedien insbesondere Drähte in die Scheibe einzubringen. Nachteilig hieran, dass das Blickfeld der Kamera gestört wird und dass die anschließende Kontaktierung z. B. durch Löten aufwändig und teuer ist.

Aufgabe der Erfindung ist es, eine Bilderfassungsanordnung der eingangs genannten Art zu schaffen, bei der die Streulichtblende einen einfachen technischen Aufbau ohne Heizeinrichtung aufweist.

Diese Aufgabe wird erfindungsgemäß dadurch gelöst, dass auf der Innenfläche der Kraftfahrzeugscheibe eine transparente Heizfolie befestigt ist, die sich im Strahlenbereich der Bilderfassungseinheit befindet.

Eine solche Anordnung zum bildlichen Erfassen weist eine technisch einfach aufgebaute Streulichtblende auf, da sie zum Beheizen nicht verwendet wird. Die Kfz.-Scheibe wird exakt in dem Bereich erwärmt, in dem sie zum Beschlagen und Vereisen neigt, so dass eine Erwärmung anderer Bereiche der Bilderfassungsanordnung nicht erfolgt und damit Energie eingespart wird.

Eine einfache und sichere Befestigung wird erreicht, wenn die Heizfolie auf der Innenfläche der Kraftfahrzeugscheibe durch einen ebenfalls transparenten Kleber befestigt ist.

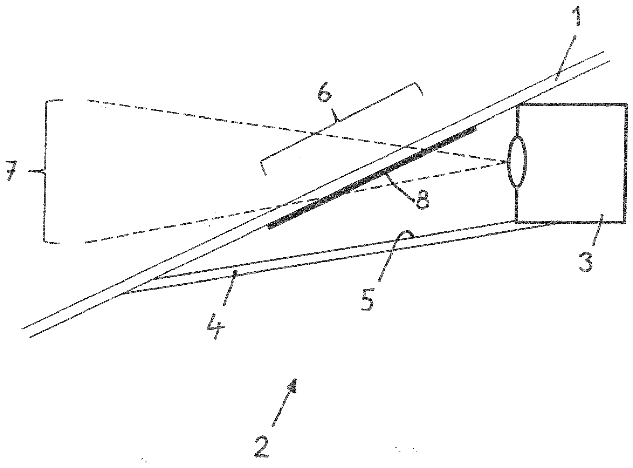

Ein Ausführungsbeispiel der Erfindung ist in der Zeichnung schematisch in einem senkrechten Schnitt dargestellt und wird im Folgenden beschrieben.

Auf der Innenfläche bzw. auf der Rückseite einer Kfz.-Scheibe 1 insbesondere einer Windschutzscheibe oder einer Rückscheibe ist eine Bilderfassungsanordnung 2 befestigt, die eine Bilderfassungseinheit 3 aufweist. Die Bilderfassungsanordnung 2 ist an ihrer Unterseite durch eine Abdeckfläche 4 geschlossen, die auf ihrer Oberseite eine Streulichtblende 5 bildet.

Die Kfz.-Scheibe 1 weist ein Sichtfenster 6 auf, durch das der Strahlenbereich 7 der Bilderfassungseinheit 3 verläuft. Im Bereich des Sichtfensters 6 ist die Kfz.-Scheibe 1 innenseitig durch eine strahlendurchlässige, transparente Heizfolie 8 abgedeckt, durch deren Erwärmung ein Beschlagen, Reif und Eisbildung auf der Scheibe sicher verhindert wird.

Die Heizfolie ist über einen transparenten Kleber an der Innenfläche der Kfz.-Scheibe 1 flächig befestigt.

## Patentansprüche

1. Anordnung (2) zum bildlichen Erfassen des Raumes vor oder hinter einem Kraftfahrzeug mit einer hinter einer Kraftfahrzeugscheibe (1) befestigten Bilderfassungseinheit (3), **dadurch gekennzeichnet, dass** auf der Innenfläche der Kraftfahrzeugscheibe (1) eine transparente Heizfolie (8) befestigt ist, die sich im Strahlenbereich (7) der Bilderfassungseinheit (3) befindet.

2. Anordnung nach Anspruch 1, **dadurch gekennzeichnet, dass** die Heizfolie (8) auf der Innenfläche der Kraftfahrzeugscheibe (1) durch einen transparenten Kleber befestigt ist.

3. Anordnung nach Anspruch 1 oder 2, **dadurch gekennzeichnet, dass** die Heizfolie (8) eine Trägerfolie aufweist, auf der Heizleiter angeordnet sind.
